# EUROPÄISCHE PATENTSCHRIFT

(11) **EP 2 348 598 B1**
(45) Veröffentlichungstag und Bekanntmachung des Hinweises auf die Patenterteilung: **24.10.2018**
(21) Anmeldenummer: 10014723.0
(22) Anmeldetag: 18.11.2010
(51) Int. Cl.: H02J 7/00, H01R 13/66, H02G 3/12

(54) **Elektrisches Unterputz-Installationsgerät für ein mobiles Audiogerät**
Electrical built-in installation device for a mobile audio device
Appareil d'installation encastré électrique pour un appareil audio mobile

(30) Priorität: 22.01.2010 DE 102010005394
(43) Veröffentlichungstag der Anmeldung: 27.07.2011
(73) Patentinhaber: ABB AG, 68309 Mannheim (DE)
(72) Erfinder: Wieske, Stefan, Dipl.-Ing., 58285 Gevelsberg (DE); Schneider, Martin, 42499 Hückeswagen (DE); Schrage, Ortwin, Dipl.-Ing., 47906 Kempen (DE)

(56) Entgegenhaltungen:
- EP-A1- 0 961 465
- EP-A1- 0 961 466
- US-A1- 2002 043 960

## Beschreibung

Die Erfindung betrifft ein elektrisches Unterputz-Installationsgerät für ein mobiles Audiogerät.

Die EP 0961465 A1 und die EP 0961466 A1 beschreiben elektrische Installationsgeräte mit einer Aufnahme für ein mobiles Telefon und einem integriertem Ladegerät.

Die US 2002/0043960 A1 zeigt ein an einer Wand befestigtes Schaltgerät mit einem Lademodul für ein mobiles Audiogerät, wie beispielsweise ein PDA oder ein mobiles Telefon.

Soll ein elektrisches Unterputz-Installationsgerät geschaffen werden, welches zur Aufladung der Akkumulatoren eines mobilen Audiogerätes dienen soll, besteht prinzipiell das Problem, dass das Unterputz-Installationsgerät zur Aufnahme des Audiogerätes relativ weit aus der Wand heraus und in den Raum hineinragt. Hierdurch ergibt sich einerseits die Gefahr, dass Personen verletzt werden, andererseits ist dies insbesondere auch beim Renovieren, wie Tapezieren, von Nachteil.

Der Erfindung liegt die Aufgabe zugrunde, ein auch bei Renovierungsarbeiten unproblematisches elektrisches Unterputz-Installationsgerät für ein mobiles Audiogerät anzugeben.

Diese Aufgabe wird erfindungsgemäß gelöst durch ein elektrisches Unterputz-Installationsgerät nach Anspruch 1.

Die mit der Erfindung erzielbaren Vorteile bestehen insbesondere darin, dass die Zentralscheibe sowie der Halter vor der Durchführung von Renovierungsmaßnahmen vom UP-Einsatz demontiert werden können. Damit ragt nur noch der mindestens eine, relativ kurze Aufnahmebolzen aus der Wand, während die relativ sperrige Haltevorrichtung für das mobile Audiogerät demontiert ist. Ein Tapezieren ist hierdurch ohne Behinderungen möglich. Insgesamt handelt es sich beim vorgeschlagenen Unterputz-Installationsgerät um ein sehr robustes und kompaktes Gerät, welches zudem material- und fertigungstechnisch optimiert ist.

Wenn zusätzlich zum Ladegerät auch ein Audioverstärker und ein Anschluss für Lautsprecher im UP-Einsatz vorgesehen sind, ist eine Beschallung eines Raumes auch über externe Lautsprecher möglich, wobei eine Regelung der Lautstärke und des Klanges sowie eine Ansteuerung des im Unterputz-Installationsgerät aufgesetzten mobilen Audiogerätes mittels einer Fernbedienung via IR-Signale erfolgen kann. Zweckmäßige Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: alle Hauptkomponenten eines elektrisches Unterputz-Installationsgeräts mit Ladegerät für ein mobiles Audiogerät in Form einer Explosionsdarstellung,
- Fig. 2: eine perspektivische Sicht auf die Frontseite eines UP-Einsatzes,
- Fig. 3: eine perspektivische Ansicht eines Halters,
- Fig. 4: eine perspektivische Ansicht einer Leiterplatte,
- Fig. 5: eine perspektivische Ansicht eines elektrisches Unterputz-Installationsgeräts mit Ladegerät für ein mobiles Audiogerät,
- Fig. 6,7: zwei ein mobiles Audiogerät tragende elektrische Unterputz-Installationsgeräte unterschiedlichen Designs.

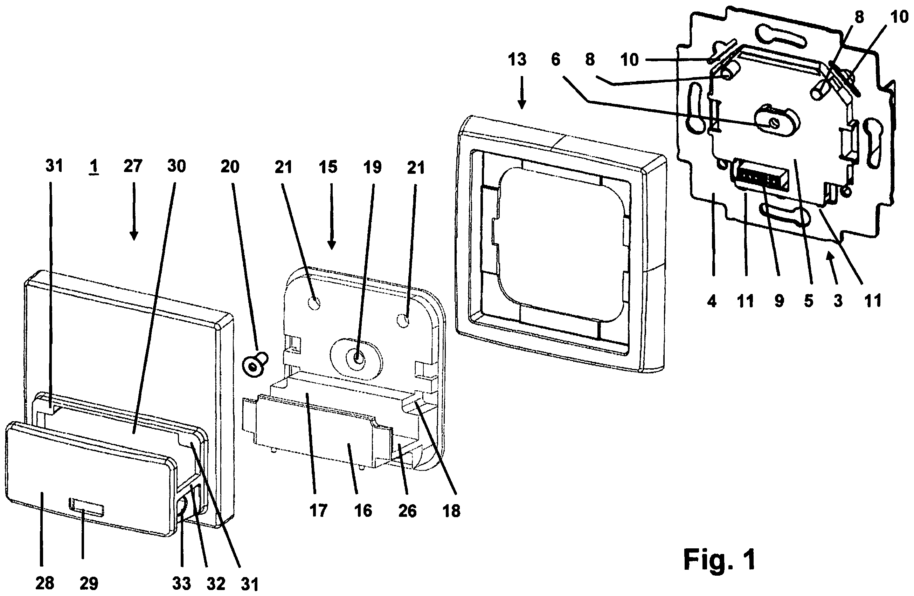

In Fig. 1 sind alle Hauptkomponenten eines elektrischen Unterputz-Installationsgeräts mit Ladegerät für ein mobiles Audiogerät in Form einer Explosionsdarstellung gezeigt. Das elektrische Unterputz-Installationsgerät 1 weist als Hauptkomponenten einen zum Einbau in eine handelsübliche 60mm-UP-Gerätedose nach DIN 49073 geeigneten UP-Einsatz 3 (Unterputz-Einsatz), einen Abdeckrahmen 13, einen Halter 15 und eine Zentralscheibe 27 auf.

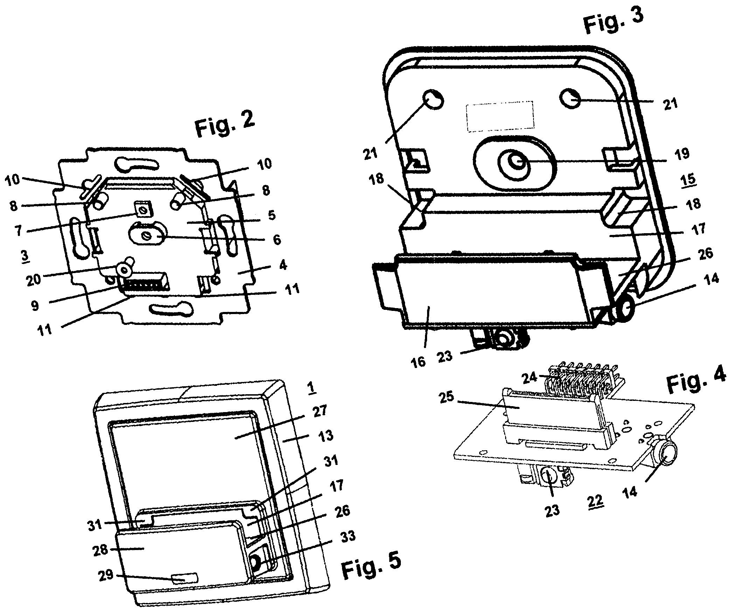

Der Einsatz 3 besitzt einen Tragring 4 und eine die Frontseite bedeckende UP-Kappe 5, welche mittig eine mit Bohrung versehene Tasche 6 zur Aufnahme einer Mutter (siehe Ziffer 7 in Fig. 2), an ihrem oberen Abschnitt zwei eckseitig angeordnete Aufnahmebolzen 8 und an ihrem unteren Abschnitt eine Ausnehmung zum Durchgriff einer Steckvorrichtung 9 aufweist. UP-Kappe 5 und Tragring 4 sind fest miteinander verbunden. Die Befestigung der UP-Kappe 5 am Tragring 4 erfolgt einerseits mittels Verrastungen 11 im unteren Abschnitt sowie andererseits durch eine Verschränkung / Verstemmung im oberen Abschnitt respektive an dessen Ecken, wozu jeweils ein Steg 10 im Tragring 4 eingebracht ist.

Der eine Basisplatte aufweisende Halter 15 weist in seinem unteren Abschnitt eine im Querschnitt U-förmig ausgebildete Haltevorrichtung für ein mobiles Audiogerät auf, bestehend aus einer Frontplatte 16, einer parallel hierzu angeordneten Gegenplatte 17 und einer diese beiden Platten verbindenden Bodenplatte 26. Um ein präzises Aufschieben der Zentralscheibe 27 auf den Halter 15 zu erleichtern, können optional Führungsprofile 18 in den oberen Kanten der Gegenplatte 17 eingebracht sein. Die Basisplatte des Halters 15 weist mittig eine Aufnahme 19 auf, durch deren Bohrung eine zur Verschraubung mit der Mutter (siehe Ziffer 7 in Fig. 2) dienende Schraube 20 greifen kann. Die Basisplatte des Halters 15 weist in ihrem oberen Abschnitt zwei eckseitig angeordnete Bohrungen 21 zum Eingriff der Aufnahmebolzen 8 der UP-Kappe 5 auf.

Die eine Basisplatte aufweisende Zentralscheibe 27 weist in ihrem unteren Abschnitt eine Ausnehmung 30 auf, welche zum Durchgreifen der U-förmig ausgebildeten Haltevorrichtung des Halters 15 mit Frontplatte 16, Gegenplatte 17 und Bodenplatte 26 geeignet ist. Dabei können in den oberen Ecken der Ausnehmung 30 optional eingebrachte Führungsstege 31 für den Eingriff mit den optionalen Führungsprofilen 18 der Gegenplatte 17 des Halters 15 dienen. Frontseitig wird diese Ausnehmung 30 mittels einer Frontplatte 28 abgeschlossen, welche zweckmäßig mit einem IR-Fenster 29 (für Infrarotstrahlung durchlässiger Bereich) versehen ist und über seitliche und gegebenenfalls auch bodenseitige Wandabschnitte 32 mit der Basisplatte der Zentralscheibe 27 verbunden ist. Die Zentralscheibe 27 kann mit einer Bohrung 33 versehen sein, über welche die Zugänglichkeit einer Anschlussbuchse (siehe Ziffer 14 in den Figuren 3 und 4) gegeben ist.

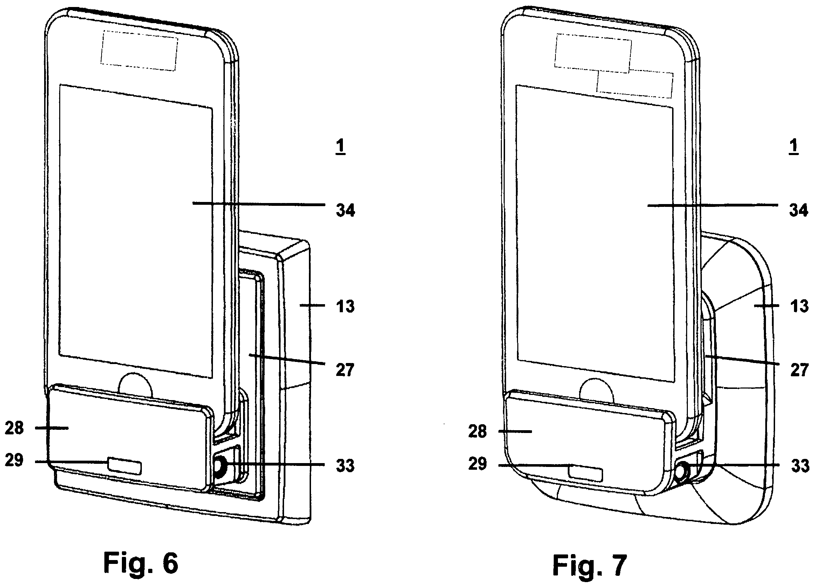

In Fig. 2 ist eine perspektivische Sicht auf die Frontseite eines UP-Einsatzes dargestellt. Der UP-Einsatz 3 weist einen elektrischen 230V-Anschluss, einen Anschluss für Lautsprecher, ein Ladegerät und einen Audioverstärker auf. Über die durch die UP-Kappe 5 greifende Steckvorrichtung 9 kann (via Leiterplatte 22, siehe Fig. 4) eine elektrische Verbindung mit einem mobilen Audiogerät (siehe Ziffer 34 in den Figuren 6 und 7) hergestellt werden, um hierdurch
- eine Aufladung des Akkumulators des mobilen Audiogerätes zu bewirken und/oder
- um vom mobilen Audiogerät abgegebene Audiosignale zu verstärken und diese wunschgemäß verstärkten Audiosignale an externe Lautsprecher abgeben zu können.

Von großer Wichtigkeit ist die robuste und verdrehsichere Aufnahme des eingesteckten mobilen Audiogerätes, wozu insbesondere die folgenden Maßnahmen beitragen:
- die in die Bohrungen 21 des Halters 15 eingreifenden Aufnahmebolzen 8 dienen zur Positionierung und Kraftübertragung und unterbinden insbesondere jedes Verdrehen / Verrutschen des Halters 15 respektive der Zentralscheibe 27 gegenüber dem UP-Einsatz 3,
- die in die Gewindebohrung der in der Tasche 6 befindlichen Mutter 7 eingedrehte Schraube 20 stellt eine sichere und mechanisch robuste Verankerung des Halters 15 mit Abdeckrahmen 13 am UP-Einsatz 5 sicher und dient zur Fixierung / Diebstahlsicherung / Kraftübertragung,
- die Verrastungen 11 einerseits sowie die Verstemmungen unter Zuhilfenahme von Stegen 10 andererseits garantieren eine dauerhaft sichere Verbindung zwischen Tragplatte 4 und UP-Kappe 5,
- eine sichere Montage des UP-Einsatzes 5 in handelsüblichen 60mm-Unterputzdosen aus Kunststoff erfolgt in üblicher Weise mittels (nicht dargestellter) Federspreizen oder mittels durch Bohrungen im Tragring 4 greifender Montageschrauben.

Als Schraube 20 kann eine Standardschraube oder optional eine Schraube mit Antrieb in Sonderform für erhöhten Diebstahlschutz verwendet werden.

In Fig. 3 ist eine perspektivische Ansicht eines Halters 15 dargestellt, wobei außer den vorstehend bereits erläuterten konstruktiven Komponenten, wie Frontplatte 16, Gegenplatte 17 mit optionalen Führungsprofilen 18, Bodenplatte 26, Aufnahme 19 und den beiden Bohrungen 21 auch zwei Komponenten einer an der Unterseite der Bodenplatte 26 montierten Leiterplatte (siehe Ziffer 22 in Fig. 4) zu erkennen sind, nämlich eine einen Line-In-Eingang darstellende Anschlussbuchse 14 (für Klinkenstecker) und ein IR-Empfänger 23. An die Anschlussbuchse 14 kann eine externe Audio-Anlage angeschlossen werden. Der IR-Empfänger 23 empfängt Ansteuersignale einer IR-Fernbedienung, welche beispielsweise zur Einstellung der gewünschten Lautstärke oder des gewünschten Klangbildes oder eines gewünschten Musiktitels dienen, eine neben dem IR-Empfänger 23 angeordnete LED blinkt bei Betätigung der Fernbedienung.

In Fig. 4 ist eine perspektivische Ansicht der unter Fig. 3 bereits erwähnten Leiterplatte 22 dargestellt. Diese Leiterplatte 22 ermöglicht einerseits mittels einer Steckvorrichtung 25 den elektrischen Anschluss eines mobilen Audiogerätes und andererseits die elektrische Verbindung mit dem UP-Einsatz 3 mittels einer Steckvorrichtung 24. Die Steckvorrichtung 25 greift durch eine nicht dargestellte Ausnehmung in der Bodenplatte 26 des Halters 15. Über die Steckvorrichtung 24 wird zusätzlich die elektrische Verbindung zwischen dem IR-Empfänger 23 sowie LED und dem UP-Einsatz 3 sichergestellt. Über die Steckvorrichtung 25 wird zusätzlich die elektrische Verbindung zwischen der Anschlussbuchse 14 und dem mobilen Audiogerät gewährleistet.

In Fig. 5 ist eine perspektivische Ansicht eines elektrischen Unterputz-Installationsgeräts 1 mit Ladegerät für ein mobiles Audiogerät dargestellt. Es ist insbesondere zu erkennen, dass die aus UP-Einsatz 3 mit montiertem Halter 15 gebildete Baueinheit im Wesentlichen durch die Zentralscheibe 27 und den Abdeckrahmen 13 abgedeckt ist. Der Abdeckrahmen 13 wird durch den montierten Halter 15 arretiert (siehe Fig. 1). Die Zentralscheibe 27 ist durch Rastmittel an der UP-Kappe 5 befestigt. Die Frontplatte 28 der Zentralscheibe 27 deckt die Frontplatte 16 des Halters 15 ab, das IR-Fenster 29 ist direkt über dem IR-Empfänger 23 angeordnet. Die Anschlussbuchse 14 ist unmittelbar hinter der Bohrung 33 angeordnet. Es ist die für die Aufnahme eines mobilen Audiogeräts geeignete, im Querschnitt U-förmig ausgebildete Haltevorrichtung zu erkennen, bestehend aus Gegenplatte 17, Bodenplatte 23 (mit der Steckvorrichtung 25) und den Frontplatten 28/16.

Zur Verrastung kann die Zentralscheibe 27 z. B. angespritzte Kunststoff-Rastfedem aufweisen, welche in Raststege des Halters 15 eingreifen. Alternativ kann die Zentralscheibe 27 z. B. auch Metall-Rastfedern aufweisen, welche über Kanten des UP-Einsatzes 3 einrasten.

In den Figuren 6 und 7 sind zwei ein mobiles Audiogerät tragende elektrische Unterputz-Installationsgeräte unterschiedlichen Designs dargestellt. Dabei ist insbesondere zu erkennen, dass eine formschöne Einbindung/Integration des elektrischen Unterputz-Installationsgeräts 1 in ein Installationsgeräte-Unterputz-Programm respektive Schalter- und Steckdosen-Unterputz-Programm sowie eine Kombination mit weiteren Geräten, beispielsweise Schaltern / Tastern / Dimmern / Steckdosen, dieses Schalter- und Steckdosen-Unterputz-Programms möglich ist. Das gezeigte mobile Audiogerät 34 passt in beide der dargestellten Unterputz-Installationsgeräte 1. Gemäß den typischen Merkmalen eines Installationsgeräte-Unterputz-Programms sind die Abdeckrahmen 13 sowie die Zentralscheiben 27 inklusive Frontplatten 28 jeweils unterschiedlich gestaltet, während ein und derselbe UP-Einsatz 3 und ein und derselbe Halter 14 inklusive Leiterplatte 22 für die verschiedenen Unterputz-Programme zum Einsatz gelangt.

### Bezugszeichenliste

- 1: elektrisches Unterputz-Installationsgerät zur Aufnahme eines mobilen Audiogeräts 34
- 2: -
- 3: UP-Einsatz inklusive elektrischem 230V-Anschluss, Anschluss für Lautsprecher, Ladegerät und Audioverstärker
- 4: Tragring
- 5: UP-Kappe
- 6: Tasche in der UP-Kappe 5 für Mutter 7
- 7: Mutter
- 8: Aufnahmebolzen
- 9: Steckvorrichtung zur Verbindung mit der Leiterplatte 22
- 10: Steg zum Verstemmung der UP-Kappe 5 auf dem Tragring 4
- 11: Verrastung zwischen Tragring 4 / UP-Kappe 5
- 12: -
- 13: Abdeckrahmen
- 14: Anschlussbuchse
- 15: Halter
- 16: Frontplatte
- 17: Gegenplatte
- 18: Führungsprofile
- 19: Aufnahme für Schraube 20
- 20: Schraube
- 21: Bohrungen für Aufnahmebolzen 8
- 22: Leiterplatte
- 23: IR-Empfänger
- 24: Steckvorrichtung für die Verbindung mit dem UP-Einsatz 3
- 25: Steckvorrichtung für die Verbindung mit dem mobilen Audiogerät 34
- 26: Bodenplatte
- 27: Zentralscheibe
- 28: Frontplatte
- 29: IR-Fenster
- 30: Ausnehmung
- 31: Führungsstege
- 32: Wandabschnitte
- 33: Bohrung für Anschlussbuchse 14
- 34: mobiles Audiogerät

## Patentansprüche

1. Elektrisches Unterputz-Installationsgerät (1) zur Aufnahme eines mobilen Audiogeräts (34),
• mit einem ein Ladegerät,
einem elektrischen 230V-Anschluss,
einem UP-Einsatz (3), welcher einen Tragring (4) und eine damit verbundene, die Frontseite bedeckende UP-Kappe (5) aufweist, welche eine Ausnehmung zum Durchgriff einer ersten Steckvorrichtung (9) aufweist,
• mit einem Halter (15), welcher eine im Querschnitt U-förmig ausgebildete Haltevorrichtung für das mobile Audiogerät (34) aufweist, bestehend aus einer Frontplatte (16), einer hierzu parallel angeordneten Gegenplatte (17) und einer diese beiden Platten (16, 17) verbindenden Bodenplatte (26), an deren Unterseite eine Leiterplatte (22) montiert ist,
• wobei die Leiterplatte (22) einerseits mittels einer zweiten Steckvorrichtung (25) den elektrischen Anschluss des mobilen Audiogerätes (34) und andererseits mittels einer dritten Steckvorrichtung (24) die elektrische Verbindung mit dem UP-Einsatz (3) via erster Steckvorrichtung (9) ermöglicht,
**dadurch gekennzeichnet, dass**
die UP Kappe (5) durch Verrastungen (11) im unteren Abschnitt sowie Verschränkung / Verstemmung im oberen Abschnitt unter Zuhilfenahme von Stegen (10) im Tragring (4) fest und dauerhaft sicher mit dem Tragring (4) verbunden ist
und an ihrem oberen Abschnitt mit mindestens einem Aufnahmebolzen (8) versehen ist,
der Halter (15) in seinem oberen Abschnitt mit mindestens einer Bohrung zum Eingriff des Aufnahmebolzens (8) versehen ist,
eine Zentralscheibe (27) vorhanden ist, welche eine Ausnehmung (30) aufweist, die zum Durchgreifen der Haltevorrichtung des Halters (15) geeignet ist und
ein Abdeckrahmen (13) vorhanden ist und
• der UP-Einsatz (3) mit dem montierten Halter (15) eine Baueinheit bildet, die durch die Zentralscheibe (27) und den Abdeckrahmen (13) abgedeckt ist und der Abdeckrahmen (13) durch den montierten Halter (15) arretiert ist.

2. Elektrisches Unterputz-Installationsgerät (1) nach Anspruch 1, **dadurch gekennzeichnet, dass** der Halter (15) eine Aufnahme (19) aufweist, durch deren Bohrung eine zur Verschraubung mit einer Mutter (7) dienende Schraube (20) greift, wobei die Mutter (7) in einer mit Bohrung versehenen Tasche (6) der UP-Kappe (5) angeordnet ist.

3. Elektrisches Unterputz-Installationsgerät (1) nach einem der vorstehenden Ansprüche, **dadurch gekennzeichnet, dass** die Ausnehmung (30) mittels einer Frontplatte (28) abgeschlossen ist, welche über seitliche und/ oder bodenseitige Wandabschnitte (32) mit der Zentralscheibe (27) verbunden ist.

4. Elektrisches Unterputz-Installationsgerät (1) nach Anspruch 3, **dadurch gekennzeichnet, dass** die Frontplatte (28) mit einem IR-Fenster (29) versehen ist, hinter welchem ein auf der Leiterplatte (22) montierter IR-Empfänger (23) angeordnet ist.

5. Elektrisches Unterputz-Installationsgerät (1) nach einem der vorstehenden Ansprüche, **dadurch gekennzeichnet, dass** der UP-Einsatz (3) einen Audioverstärker und/oder einen Anschluss für Lautsprecher beinhaltet.

## Claims

1. Electrical flush-mounted installation device (1) for receiving a mobile audio device (34),
• comprising a a charging device, an electrical 230V connection, a flush-mounted insert (3) which has a supporting ring (4) and a flush-mounted cap (5) which is connected to the said supporting ring and covers the front side and has a recess for a first plug-in apparatus (9) to pass through,
• comprising a holder (15) which has a holding apparatus, which is of U-shaped design in cross section, for the mobile audio device (34), comprising a front panel (16), a mating panel (17) which is arranged parallel to the said front panel, and a base plate (26) which connects these two panels (16, 17) and is fitted with a printed circuit board (22) on its bottom side,
• wherein the printed circuit board (22) firstly renders possible electrical connection of the mobile audio device (34) by means of a second plug-an apparatus (25) and secondly renders possible electrical connection to the flush-mounted insert (3) via the first plug-in apparatus (9) by means of a third plug-in apparatus (24), **characterized in that**
the flush-mounted cap (5) is connected fixedly in the supporting ring (4) and permanently securely to the supporting ring (4) by latching arrangements (11) in the lower section and also interleaving/caulking arrangements in the upper section with the aid of webs (10), and is provided with at least one receiving bolt (8) on its upper section,
the holder (15) is provided, in its upper section, with at least one bore for engagement of the receiving bolt (8),
a central plate (27) is present, which has a recess (30) which is suitable for the holding apparatus of the holder (15) to pass through, and
a covering frame (13) is present, and
t he flush-mounted insert (3) forms, with the mounted holder (15), one structural unit which is covered by the central plate (27) and the coupling frame (13), and the covering frame (13) is locked in place by the mounted holder (15).

2. Electrical flush-mounted installation device (1) according to Claim 1, **characterized in that** the holder (15) has a receptacle (19), a screw (20), which serves to form a screw connection with a nut (7), passing through the bore of the said receptacle, wherein the nut (7) is arranged in a pocket (6) of the flush-mounted cap (5), the said pocket being provided with a bore.

3. Electrical flush-mounted installation device (1) according to one of the preceding claims, **characterized in that** the recess (30) is closed off by means of a front panel (28) which is connected to the central plate (27) by way of lateral and/or base-side wall sections (32).

4. Electrical flush-mounted installation device (1) according to Claim 3, **characterized in that** the front panel (28) is provided with an infrared window (29), an infrared receiver (23) which is mounted on the printed circuit board (22) being arranged behind the said infrared window.

5. Electrical flush-mounted installation device (1) according to one of the preceding claims, **characterized in that** the flush-mounted insert (3) contains an audio amplifier and/or a connection for loudspeakers.

## Revendications

1. Appareillage d'installation électrique à pose encastrée (1) destiné à accueillir un appareil audio mobile (34),
* comprenant un un chargeur, un raccordement électrique de 230 V, un insert à pose encastrée (3), qui possède un anneau porteur (4) et un cache à pose encastrée (5) relié à celui-ci et qui recouvre le côté avant, lequel possède un évidement servant à la pénétration d'un premier dispositif à enfichage (9),
* comprenant un élément de maintien (15) qui possède un dispositif de maintien configuré avec une section transversale en forme de U pour l'appareil audio mobile (34), constitué d'une plaque avant (16), d'une contre-plaque (17) disposée parallèlement à celle-ci et d'une plaque de fond (26) qui relie ces deux plaques (16, 17) et au niveau du côté inférieur de laquelle et monté un circuit imprimé (22),
* le circuit imprimé (22) permettant d'un côté le branchement électrique de l'appareil audio mobile (34) au moyen d'un deuxième dispositif à enfichage (25) et de l'autre côté, au moyen d'un troisième dispositif à enfichage (24), la liaison électrique avec l'insert à pose encastrée (3) par le biais du premier dispositif à enfichage (9),
**caractérisé en ce que**
le cache à pose encastrée (5) est relié en position fixe dans l'anneau porteur (4) et fixé à demeure avec l'anneau porteur (4) par des éléments d'encliquetage (11) dans la portion inférieure ainsi que par une imbrication / un matage dans la portion supérieure à l'aide d'éléments jointifs (10)
et il est pourvu d'au moins un goujon d'accueil (8) au niveau de sa portion supérieure,
l'élément de maintien (15) est pourvu d'au moins un trou dans sa portion supérieure pour l'introduction du goujon d'accueil (8),
une plaque centrale (27) est présente, laquelle possède un évidement (30) qui adapté à la pénétration du dispositif de maintien de l'élément de maintien (15) et un cadre de protection (13) est présent et
* l'insert à pose encastrée (3) forme avec l'élément de maintien (15) monté une unité modulaire qui est recouverte par la plaque centrale (27) et le cadre de protection (13) et le cadre de protection (13) est bloqué par l'élément de maintien (15) monté.

2. Appareillage d'installation électrique à pose encastrée (1) selon la revendication 1, **caractérisé en ce que** l'élément de maintien (15) possède un logement (19) à travers le trou duquel pénètre une vis (20) servant être vissée avec un écrou (7), l'écrou (7) étant disposé dans une poche (6) munie du trou du cache à pose encastrée (5).

3. Appareillage d'installation électrique à pose encastrée (1) selon l'une des revendications précédentes, **caractérisé en ce que** l'évidement (30) est fermé au moyen de plaque avant (28), laquelle est reliée à la plaque centrale (27) par le biais de portions de paroi (32) latérales et/ou du côté du fond.

4. Appareillage d'installation électrique à pose encastrée (1) selon la revendication 3, **caractérisé en ce que** la plaque avant (28) est pourvue d'une fenêtre à IR (29) derrière laquelle est disposé un récepteur d'IR (23) monté sur le circuit imprimé (22).

5. Appareillage d'installation électrique à pose encastrée (1) selon l'une des revendications précédentes, **caractérisé en ce que** l'insert à pose encastrée (3) contient un amplificateur audio et/ou un raccord pour un haut-parleur.
